# EUROPEAN PATENT APPLICATION

(11) **EP 1 441 272 A2**
(43) Date of publication of application: **28.07.2004**
(21) Application number: 04250078.5
(22) Date of filing: 09.01.2004
(51) Int. Cl.: G05D 7/06

(54) **Process flow control circuit**

(30) Priority: 23.01.2003 US 442027 P
(71) Applicant: RheoGene Holdings, Inc., Philadelphia, PA 19106-2399 (US)
(72) Inventor: Vinson, James Woodrow, Houston, Texas 77062 (US)
(74) Representative: Kent, Venetia Katherine

(57) **Abstract**

A flow control scheme for use with a flow circuit (10), including a fluid transfer device (30) such as a pump or a compressor. The flow control device (52) monitors the power and pressure differential of the fluid transfer device (30). The flow control device (54) is capable of maintaining the flow of the fluid transfer device (30) at a baseline value in response to varying operational conditions within the flow circuit (10).

## Description

### BACKGROUND OF THE INVENTION

### 1. Field of the Invention

The invention relates generally to the field of the flow control of fluids. More specifically, the present invention relates to a method and apparatus to control flow through a fluid flow circuit in response to variations in the fluid flow circuit.

### 2. Description of Related Art

Fluid flow circuits generally comprise multiple pieces of fluids handling hardware, such as heat exchangers, valves, vessels, drums and the like that are connected together by a series of piping to form the circuit. In many instances the motive force for driving the fluid through the circuit is provided by a fluid transfer device, such as a compressor or a pump. Generally the fluid flow through fluid transfer devices is dependent upon the pressure imparted onto the fluid by the fluid transfer device. This pressure can also be referred to as the differential pressure across the device. Typically an increase in differential pressure results in a drop in the amount of fluid flow transmitted through the device. In most instances this increase in differential pressure is caused by an increase in pressure drop within the flow circuit of which the device is included. Increases in pressure drop within a flow circuit can be attributed to a variety of causes, such as a decrease in the fluid density of the flow circuit, an increase in pressure drop across a piece of equipment within the flow circuit, or an increase in the operating pressure of a particular piece of equipment within the flow circuit.

Cases where the pressure drop within a flow circuit is caused by an increase in pressure drop across a piece of equipment can be especially troublesome when the pressure drop increase is caused by equipment fouling. Equipment fouling usually increases over time instead of instead of stabilizing or getting cleaner ― thus the pressure drop across a fouled piece of equipment will increase with use. At some point the pressure drop increase in the circuit due to equipment fouling will reduce the operating flow through the fluid circuit to an unacceptable level. At this point the system must be shut down and the equipment cleaned. Shutting down a fluid flow circuit and cleaning it is expensive from an operational as well as a lost revenue standpoint.

One solution to the fouling problem in a fluid flow circuit is to monitor the flow rate through the circuit with a flow meter, and increase the speed of the fluid transfer device to correspondingly increase the flow rate to a normal or acceptable operating level. One of the problems with relying on flow meter readings is that flow meters are sometimes unreliable, especially when installed in two-phase flow service. Further, these flow meters themselves can sometimes become fouled which not only adds to their unreliability, but also increases pressure drop within the fluid flow circuit. Therefore, a need exists for an apparatus and method for use with a fluid transfer device and fluid flow circuit that can maintain a substantially constant flow rate across the fluid transfer device. Further, the apparatus and method must be capable of responding to operational changes in the fluid flow circuit while maintaining that substantially constant flow across the fluid transfer device.

### BRIEF SUMMARY OF THE INVENTION

The present invention involves a fluid flow circuit comprising a fluid transfer device, a pressure differential measurement device to measure the pressure differential across the fluid transfer device, a power monitoring device that measures the power of the fluid transfer device, and a controller in communication with the pressure differential measurement device and the power monitoring device. The controller maintains a constant fluid flow through the fluid transfer device by adjusting the operational speed of the fluid transfer device in response to varying pressure losses within the fluid flow circuit. The fluid transfer device can be a centrifugal pump, a positive displacement pump, a compressor, a turbine, a diaphragm pump, or a water seal pump, or any other device capable of transporting fluid through a fluid flow circuit.

The controller maintains the power of the fluid transfer device as a function of the fluid flow through the fluid transfer device and of the pressure differential measured by the pressure differential measurement device. The varying pressure drop within the fluid flow circuit can come from a rise in pressure in the fluid flow circuit within the high pressure portion of the fluid flow circuit (downstream of the fluid transfer device).

One embodiment of the fluid flow circuit of the present invention can include a pump having an inlet port and an outlet port with a first pressure measurement device disposed within the inlet port and a power monitoring device that measures the power of the pump. Also included in the alternative embodiment is a speed control device that measures the rotational speed of the pump and is capable of varying the rotational speed of the pump, a second pressure measurement device disposed within the outlet port, and a controller in communication with the first pressure measurement device, the second pressure measurement device, the power monitoring device, and the speed control device. The controller cooperates with the speed control device to maintain a constant fluid flow through the pump by adjusting the rotational speed of the pump in response to varying operational conditions within the fluid flow circuit.

The present invention includes a method of maintaining a constant flow of fluid within a fluid flow circuit comprising the steps of, installing a fluid transfer device within a fluid flow circuit, establishing a baseline flow for the fluid transfer device, monitoring the pressure differential across the fluid transfer device, monitoring the power provided to the fluid transfer device, and adjusting the power provided to the fluid transfer device to maintain a flow through the fluid transfer device that is approximately equal to the baseline flow. The fluid transfer device can be a centrifugal pump, a positive displacement pump, a compressor, a diaphragm pump, or a water seal pump. One method of the present invention includes determining the power of the fluid transfer device as a function of the fluid flow through the fluid transfer device and of the pressure differential measured by the pressure differential measurement device.

### BRIEF DESCRIPTION OF THE SEVERAL VIEWS OF THE DRAWING.

Figure 1 depicts a schematic view of a flow circuit.
Figure 2 illustrates a flow curve for a fluid transfer device.

### DETAILED DESCRIPTION OF THE INVENTION

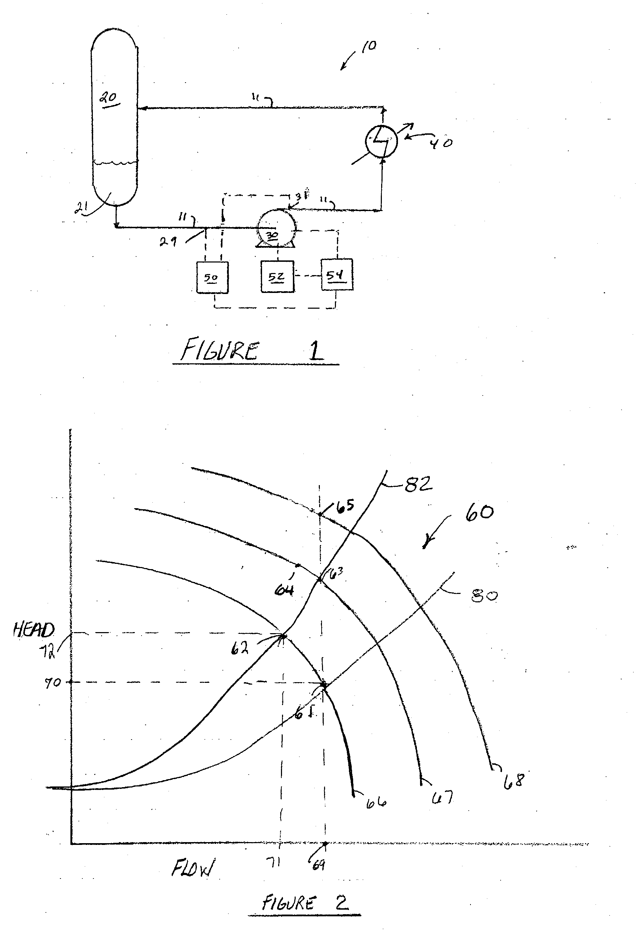

With reference to the drawing herein, a flow circuit 10 comprising, piping 11, a vessel 20, a flow transfer device 30, and a fluids processing device 40 is shown in Figure 1. The fluids processing device 40 is shown as a heat exchanger with the process fluid of the flow circuit 10 passing through its tube side. However, any number of other process components could comprise the fluids processing device 40, such as a filter, dryer, separator, or coalescer. Likewise, these substitute elements, or other like elements, could also take the place of the vessel 20.

The specific elements of the flow circuit 10 as illustrated in Figure 1 are not critical to the invention, but instead are shown for illustration. The present invention will operate with the specific items shown in Figure 1, or with additional fluids handling hardware, such as other vessels, exchangers, and the like, or fewer items as shown. Similarly the fluid transfer device 30 is shown as a centrifugal pump, but could also be a compressor, reciprocating pump, turbine, diaphragm pump, or any other device used to motivate fluids through a process circuit.

In one specific embodiment of the present invention as illustrated in Figure 1, fluid 21 within the vessel 20 flows to a flow transfer device 30 where energy in the form of added pressure is imparted to the fluid 21. The fluid 21 exits the fluid transfer device 30 at an increased pressure and flows through the fluids processing device 40 before it returns to the vessel 20. Connected to each piece of equipment is a series of piping 11 that provides a conduit for the fluid 21. The fluid 21 can be a liquid, gas, vapor, slurry, powder, any substance motivated through a fluids processing device 40, and mixtures thereof.

A pressure differential measurement device 50 is connected to the piping 11 upstream 29 and downstream 31 of the fluid transfer device 30 which measures the fluid pressure differential across the fluid transfer device 30. Typically the pressure upstream 29 of the fluid transfer device 30 is lower than the pressure downstream 31 of the fluid transfer device 30. It is appreciated that those skilled in the art can readily determine and implement appropriate hardware and monitoring criteria to obtain a suitable manner of obtaining this pressure differential.

The power monitoring device 52 measures the power consumed by the fluid transfer device 30. Typically the fluid transfer device 30 is powered by electrical power, thus the power monitoring device 52 measures the voltage and current delivered to the fluid transfer device 30. The voltage and current data measured by the power monitoring device 52 is communicated to the controller 54. The power consumed by the fluid transfer device 30 can be calculated within the power monitoring device 52, within the controller 54, or some other device. Thus the manner and technique of calculating the electrical power consumed by the fluid transfer device 30 is not critical to the present invention and any now known or later developed manner of obtaining the power of the fluid transfer device 30 is considered within the scope of this invention.

The flow rate of the fluid transfer device 30 is directly related to its efficiency multiplied by the ratio of its power consumption vs. pressure differential. The general equation for determining its flow is: Flow Rate = (Power Consumed/Pressure Differential) x Efficiency. In a more specific relationship, the flow rate through a centrifugal pump can be determined from the following equation: Flow Rate (gpm) = (Electrical HP input to motor)(Motor Efficiency)(3960)(Pump Efficiency)/(Head_{ft})(Specific Gravity). Utilizing these relationships the present invention is capable of determining flow through the fluid transfer device 30 based upon its power consumption and pressure differential. The efficiency of the specific fluid transfer device at hand is wholly dependent upon its make and model, thus that information should be obtainable from the manufacturer of the device. It should be noted that the present invention is not only applicable to an array of fluid transfer devices, but also to multiple makes and models of these devices. The flow relationships presented represent the preferred method of determining flow based on the power and pressure differential of the fluid transfer device 30. However, the scope of the present invention is not limited the equations cited herein, but includes any number of known or later developed relationships.

Referring now to Figure 2, the series of curves (66-68) represent head and flow characteristics of a fluid transfer device. As is well known, each of the curves (66-68) relate to a constant rotational speed at which the fluid transfer device is operating. For the purposes of illustration it will be assumed that reference numeral 69 indicates a baseline volumetric flow at a corresponding baseline Head 70. The baseline volumetric flow 69 and baseline Head 70 represent the desired or design conditions of the fluid transfer device. Further, if the fluid transfer device is operating along curve 66 the baseline flow will be realized on curve 66 at reference numeral 61. Should the exit pressure of the fluid transfer device increase (assuming constant inlet pressure and rotational speed) the fluid transfer device will travel "up the curve" as the pressure differential across the fluid transfer device (or Head) increases. It can be seen from Figure 2 when the fluid transfer device moves up the curve to reference numeral 62, the flow of the fluid transfer device decreases. However, should the rotational speed of the fluid transfer device be increased to operate along the curve 67, the baseline flow 69 could be achieved while meeting or exceeding the baseline Head 70.

The exit pressure of the fluid transfer device 30 can increase for varied reasons. For example, solids suspended within the fluid 21 can become deposited inside of the fluids processing device 40 (also known as fouling) thereby increasing the pressure drop across the fluids processing device 40. The increased pressure drop across the fluids processing device 40 translates into an increase in pressure at the exit of the fluid transfer device 30 that correspondingly increases the pressure differential across the fluid transfer device 30. When the fluids processing device 40 is a heat exchanger, fouling of the fluids processing device 40 is almost certain to occur.

The system curves 80 and 82 represent how the fluid transfer device 30 might operate with respect to a certain flow circuit. The system curve however assumes that the system (or circuit) is static and will provide an unchanging amount of pressure loss with the same amount and type of fluid flow. Thus if the system (or circuit) combined with the fluid transfer device 30 is altered or changes its operating parameters, the system curve no longer models the operating parameters (head and flow) of the fluid transfer device 30. One example of an altered system is if the pressure drop across a certain piece of equipment within the system increases, i.e. a fouled heat exchanger, fouled flow element, or a control valve providing more or less pressure drop.

While the controller 54 can be of any number of different makes or models, the controller 54 should provide automation to the flow circuit 10 to ensure a relatively constant flow through the flow circuit 10 at all times. Thus it is preferred that the controller 54 be comprised of an electrical processing system such as a computer or micro-computer system that is programmable, or controlled by software stored elsewhere, and be able to sample the data supplied to it on a frequent basis, i.e. multiple samples per minute. The controller 54 should also be capable of quickly processing the data it receives so it can evaluate the data and then send an instantaneous or almost instantaneous command to adjust the operating parameters of the flow circuit 10. One of the advantages of employing an electrical programmable system is the flexibility of being able to evaluate an infinitely different number of processes based on the commands programmed into the controller 54 or directed to the controller 54.

In operation, the controller 54 constantly monitors the flow through the flow transfer device 30 by its evaluation of the power consumed by the fluid transfer device 30 and pressure differential across the fluid transfer device 30. Should the flow decrease through the fluid transfer device 30, the power imparted to the fluid by the fluid transfer device 30 will decrease as well. Set points programmed within the controller 54 are triggered when the flow falls below those set points. Once the set points are triggered the controller 54 of the present invention increases (or decreases) the speed of the fluid transfer device 30 resulting in an increase (or decrease) in flow and head through the fluid transfer device 30.

In a more specific example with reference to Figure 2, considering a fluid transfer device 30 to be operating at reference number 61 on the curve 66 the fluid transfer device 30 would deliver a Flow 69 at Head 70. As such the fluid transfer device 30 would be operating on system curve 80. When the pressure on the discharge side of the fluid transfer device 30 increases the flow characteristics of the fluid transfer device 30 can move up the curve to reference number 62, resulting in a new Flow 71 and Head 72. Thus the system can no longer be modeled by system curve 80, but instead by system curve 82. Assuming for the purposes of example that the set points programmed within the controller are triggered at reference number 62, the controller could then increase the speed of the fluid transfer device 30 to operate on the curve 67 at reference number 63, which is at the baseline flow 69. Further, the set points could be established so that the fluid transfer device 30 increases its flow (with corresponding head) to be some percentage above the baseline flow of reference numeral 69.

In contrast, should the pressure losses in the flow circuit 10 decrease, the controller 54 can be programmed to decrease the speed of the fluid transfer device and maintain the baseline flow required by the specific process. Thus the controller 54 can be programmed to ensure that the fluid circuit 10 has a relatively constant flow and respond to operational changes within the fluid flow circuit 10. These changes include changes in pressure drop throughout the circuit, either as a whole say due to density or flow rate variations, or to specific equipment that has undergone a change in pressure drop.

The criteria for determining the set points of the controller 54 depend on the flow circuit 10 and its operating specifications, design requirements, and/or system accuracy. Some process circuits can function adequately with a wide variance of flow rates, while others in order to operate properly must maintain a narrow range of flow rates. Accordingly the magnitude of flow and or percentage change between flow rates 71 and 69 depends almost wholly on the application in which the present invention is being implemented. It is appreciated that one skilled in the art can develop proper set points for use with this invention without undue experimentation.

Controlling the fluid transfer device 30 flow in the manner described above has many advantages. For example, in situations when the pressure losses in the flow circuit 10 are due to fouling of equipment such as heat exchangers, the dynamic system described herein can respond to maintain the required baseline flow without the need for frequently removing and cleaning the fouled equipment and shutting down the entire circuit. This is particularly valuable in chemical purification systems where polymerizable materials, such as (meth)acrylic acid or styrene, are present. For example, the cleaning cycle of an exchanger (such as a reboiler) whose fouling reduces flow in a flow circuit 10 below the baseline flow due to increased pressure drop can be changed from a 3-4 month cycle to a year or more. As such, a considerable savings in maintenance, capital, and other expenses can be readily realized by implementing the present invention. Energy costs are significantly reduced as well since alternative flow control methods generally require control valves or flow meters within the service that incur fluid frictional losses. Eliminating these frictional losses reduces the operating energy consumed by the flow transfer device 30.

Another advantage of the present invention is the flexibility in which the baseline flow may be adjusted. Utilization of a controller 54 enables a plant operator to update the value of the baseline flow while the fluid circuit 10 is on-line. Further, the set points can be changed as well while the fluid circuit 10 is on-line.

The present invention described herein, therefore, is well adapted to carry out the objects and attain the ends and advantages mentioned, as well as others inherent therein. While a presently preferred embodiment of the invention has been given for purposes of disclosure, numerous changes exist in the details of procedures for accomplishing the desired results. These and other similar modifications will readily suggest themselves to those skilled in the art, and are intended to be encompassed within the spirit of the present invention disclosed herein and the scope of the appended claims.

## Claims

1. A fluid flow circuit comprising:
a fluid transfer device;
a pressure differential measurement device to measure the pressure differential across the fluid transfer device;
a power monitoring device to measure the power of the fluid transfer device; and
a controller in communication with the pressure differential measurement device and the power monitoring device,
where said controller is programmed with software commands to automatically sample data reflecting the power and the pressure differential of the fluid transfer device and to automatically maintain a substantially constant fluid flow through the fluid transfer device based on the power and the pressure differential of the fluid transfer device.

2. The fluid flow circuit of claim 1 where said controller maintains a substantially constant fluid flow through the fluid transfer device by adjusting the speed of the fluid transfer device in response to variations in the system curve of the fluid transfer device.

3. The fluid flow circuit of claim 1, where the fluid transfer device is selected from the group consisting of a centrifugal pump, a positive displacement pump, a compressor, a turbine, a diaphragm pump, and a water seal pump.

4. The fluid flow circuit of claim 1, where the varying pressure drop within the fluid flow circuit comprises a rise in pressure losses in the fluid flow circuit.

5. The fluid flow circuit of claim 1, where the constant fluid flow is approximately equal to the baseline flow of the fluid flow circuit.

6. A method of maintaining a constant flow of fluid within a fluid flow circuit comprising the steps of:
installing a fluid transfer device within a fluid flow circuit;
establishing a baseline flow for the fluid transfer device;
monitoring the pressure differential across the fluid transfer device;
monitoring the power provided to the fluid transfer device; and
adjusting the power provided to the fluid transfer device to maintain a flow through the fluid transfer device that is approximately equal to the baseline flow.

7. The method of claim 6 where the fluid transfer device is selected from the group consisting of a centrifugal pump, a positive displacement pump, a compressor, a turbine, a diaphragm pump, and a water seal pump.

8. The method of claim 6 further comprising determining the power of the fluid transfer device as a function of the fluid flow through the fluid transfer device and of the pressure differential measured by the pressure differential measurement device.

9. The method of claim 6 where the power to the fluid transfer device is adjusted by increasing its magnitude.

10. The method of claim 6 where the power to the fluid transfer device is adjusted by decreasing its magnitude.

11. The method of claim 6 where the power to the fluid transfer device is adjusted to produce a flow through the fluid transfer device that is greater than the baseline flow.

12. The method of claim 6 where the power to the fluid transfer device is adjusted to produce a flow through the fluid transfer device that is less than the baseline flow.
